# EUROPEAN PATENT SPECIFICATION

(11) **EP 3 462 671 B1**
(45) Date of publication and mention of the grant of the patent: **29.07.2020**
(21) Application number: 16906599.2
(22) Date of filing: 28.06.2016
(51) Int. Cl.: H04L 12/24

(54) **VIRTUAL NETWORK FUNCTION RESOURCE MANAGEMENT METHOD AND DEVICE**
VERFAHREN UND VORRICHTUNG ZUR VERWALTUNG EINER FUNKTIONSRESSOURCE EINES VIRTUELLEN NETZWERKS
PROCÉDÉ ET DISPOSITIF DE GESTION DE RESSOURCES DE FONCTION DE RÉSEAU VIRTUEL

(43) Date of publication of application: 03.04.2019
(73) Proprietor: Huawei Technologies Co., Ltd., Longgang Shenzhen, Guangdong 518129 (CN)
(72) Inventor: YU, Fang, Shenzhen Guangdong 518129 (CN); ZHANG, Fengzhe, Shenzhen Guangdong 518129 (CN); PENG, Zhan, Shenzhen Guangdong 518129 (CN)
(74) Representative: Goddar, Heinz J.
(86) International application number: PCT/CN2016/087494
(87) International publication number: WO 2018/000197

(56) References cited:
- CN-A- 105 337 758
- CN-A- 105 634 780
- CN-A- 105 634 782
- "GS NFV-MAN 001 V0.5.0 Network Function Virtualization (NFV) Management and Orchestration", , 23 May 2014 (2014-05-23), pages 1-198, XP055171810, Retrieved from the Internet: URL:http://docbox.etsi.org/ISG/NFV/Closed_ WGs/MAN/05-CONTRIBUTIONS/2014/ [retrieved on 2015-02-24]
- HUAWEI TECH (UK) CO ET AL: "Draft_GS_NFV-IFA008v080_Contribution", ETSI DRAFT; NFVIFA(16)000620R3, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. - NFV IFA - Interfaces and Architecture 20 May 2016 (2016-05-20), pages 1-76, XP014273003, Retrieved from the Internet: URL:docbox.etsi.org\ISG\NFV\IFA\05-CONTRIB UTIONS\2016\NFVIFA(16)000620r3_Draft_GS_NF V-IFA008v080_Contribution\NFVIFA(16)000620 r3_NFV-IFA008v080-cm.doc [retrieved on 2016-05-20]
- MICHELE STECCA ET AL: "Sticky Session Support in Auto Scaling IaaS Systems", SERVICES (SERVICES), 2011 IEEE WORLD CONGRESS ON, IEEE, 4 July 2011 (2011-07-04), pages 232-239, XP032052522, DOI: 10.1109/SERVICES.2011.27 ISBN: 978-1-4577-0879-4
- "NETWORK FUNCTIONS VIRTUALISATION NFV); Management and Orchestration; Functional Requirements Specification", ETSI GS NFV-IFA 010, v2.1.1, 6 April 2016 (2016-04-06), XP014311763,

## Description

### TECHNICAL FIELD

This application relates to the communications field, and in particular, to a virtualized network function resource management method and device.

### BACKGROUND

According to a network functions virtualization (Network Function Virtualization, NFV) technology, some network functions may be implemented on commodity hardware by means of software. For example, in a telecommunications network, some telecommunications network functions may be implemented on a universal cloud server, a universal switch, and a universal memory by using the NFV technology, thereby implementing rapid and efficient network service deployment.

In the NFV technology, scaling out and scaling in of a network element are implemented through elastic scaling (scaling), that is, a related resource is dynamically allocated to or reclaimed from a virtualized network function (Virtualized Network Function, VNF) based on a requirement. Currently, when scaling in (scaling in) processing is performed, a virtualized network function manager directly scales in a to-be-scaled-in virtual machine after determining the to-be-scaled-in virtual machine, resulting in damage of services running on the virtual machine.

"GS NFV-MAN 001 V0.5.0 Network Function Virtualization (NFV) Management and Orchestration", 23 May 2014, pages 1-198, Retrieved from the Internet: URL:http://docbox.etsi.org/ISG/NFV/Closed_WGs/MAN/05-CONTRIBUTIONS/2014/ [retrieved on 2015-02-24] discloses an overview of the NFV management and orchestration objectives. Integration and interworking of NFV framework with current management systems is in scope. In addition to orchestration functions, the document provides an overview of the management functions (e.g., fault management, testNFV appliatices...) needed by NFV.
HUAWEI TECH (UK) CO ET AL: "Draft_GS_NFV-I FA008v080_Contribution", ETSI DRAFT; NFVIFA(16)000620R3, EUROPEAN TELECOMMUNICATIONS STANDARDS INSTITUTE (ETSI), 650, ROUTE DES LUCIOLES ; F-06921 SOPHIA-ANTIPOLIS; FRANCE vol. - NFV IFA - Interfaces and Architecture 20 May 2016, pages 1-76, Retrieved from the Internet: URL:docbox.etsi.org\ISG\NFV\IFA\05-CONTRIBUTIONS\2016\NFVIFA(16)000620r3_Draft_G S_NFV-IFA008v080_Contribution\N FVI FA(16)000620r3_N FV-I FA008v080-cm .doc [retrieved on 2016-05-20] discloses the interfaces supported over the Ve-Vnfm-em and Ve-Vnfm-vnf reference points of the NFV-MANO architectural framework ETSI GS NFV-MAN 001 [i.3] as well as the information elements exchanged over those interfaces.

MICHELE STECCA ET AL: "Sticky Session Support in Auto Scaling laaS Systems", SERVICES (SERVICES), 2011 IEEE WORLD CONGRESS ON, IEEE, 4 July 2011, pages 232-239, DOI: 10.1109/SERVICES.2011.27 ISBN: 978-1-4577-0879-4 analyzes the issues related to the management of sessions in Web Applications running on Auto Scaling IaaS Systems. The document focusses on the effect of scaling operations (i.e., dynamic addition/removal of virtual machines) on the Sticky Session paradigm provided by Web Servers. Two different solutions are proposed, namely Session Monitoring and Session Migration, and the implementation of the former in the Open Source Eucalyptus IaaS System is described.

### SUMMARY

In view of this, embodiments of this application provide a virtualized network function resource management method and device, to prevent services carried on a virtual machine from being damaged when a VNF performs resource scaling in.

According to a first aspect, a virtualized network function resource management method is provided. The method includes: sending, by a virtualized network function manager VNFM device, a preprocessing request message to a manager device, where the preprocessing request message is used to request the manager device to perform resource pre-scaling in on a virtualized network function VNF instance, and the resource pre-scaling in includes a migrating service carried in a virtualization container on which resource pre-scaling in needs to be performed; and performing, by the VNFM device, resource scaling in on the VNF instance after determining that the EM device completes the resource pre-scaling in,
wherein the manager device is an element manager, EM, device, and the
performing, by the VNFM device, resource scaling in on the VNF instance after determining that the EM device completes the resource pre-scaling in comprises:
receiving, by the VNFM device, a preprocessing acknowledgment message sent by the EM device, wherein the preprocessing acknowledgment message is used to notify the VNFM device that the resource pre-scaling in has been completed; and
performing, by the VNFM device, the resource scaling in on the VNF instance based on the preprocessing acknowledgment message.

In the virtualized network function resource management method in this embodiment of this application, the EM device is requested to perform preprocessing on the virtualization container on which resource scaling in needs to be performed in a virtualization container corresponding to the VNF instance and migrate the service carried in the virtualization container, to avoid damage of a function of the VNF instance during resource scaling in.

Optionally, the performing, by the VNFM device, resource scaling in on the VNF instance after determining that the EM device completes the resource pre-scaling in includes: performing, by the VNFM device, the resource scaling in on the VNF instance after a time period elapses after the VNFM device sends the preprocessing request message to the EM device. Therefore, a resource waste caused due to an excessively long wait time can be avoided, thereby improving resource utilization.

Optionally, before the sending, by a VNFM device, a preprocessing request message to an EM device, the method further includes: receiving, by the VNFM device, a resource scaling in request message sent by a network functions virtualization orchestrator NFVO device, where the resource scaling in request message includes an identifier list of the virtualization container on which resource pre-scaling in needs to be performed, and the preprocessing request message includes the identifier list of the virtualization container.

Optionally, the resource scaling in request message further includes a time parameter, and the time parameter is used to determine a time period; and the performing, by the VNFM device, resource scaling in on the VNF instance after determining that the EM device completes the resource pre-scaling in includes: performing, by the VNFM device, the resource scaling in on the VNF instance after the time period elapses after the VNFM device sends the preprocessing request message to the EM device.

Optionally, the preprocessing request message includes an identifier list of the virtualization container on which resource pre-scaling in needs to be performed, and the identifier list is used to identify the virtualization container on which resource pre-scaling in needs to be performed.

Optionally, before the sending, by a VNFM device, a preprocessing request message to an EM device, the method further includes: receiving, by the VNFM device, a resource scaling in request message sent by the EM device, where the resource scaling in request message includes identification information of a virtualization deployment unit VDU, and the virtualization container created based on the VDU identified by the identification information include the virtualization container identified by the identifier list.

Optionally, the resource scaling in request message further includes a quantity parameter or a proportion parameter, where the quantity parameter is used to indicate, to the VNFM device, a quantity of virtualization containers on which resource pre-scaling in needs to be performed; and the proportion parameter is used to indicate, to the VNFM device, a proportion of the virtualization container on which resource pre-scaling in needs to be performed in all the virtualization container created based on the VDU identified by the identification information.

Optionally, after the receiving, by the VNFM device, a resource scaling in request message sent by the EM device and before the sending, by a VNFM device, a preprocessing request message to an EM device, the method further includes: sending, by the VNFM device, a VNF life cycle management operation granting request message to an NFVO device, where the VNF life cycle management operation granting request message is used to request granting of the resource scaling in from the NFVO device; and receiving, by the VNFM device, a VNF life cycle management operation granting response message sent by the NFVO device.

Optionally, the identification information includes at least one of the following information: VDU identification information of the VDU, group identification information of the VDU, and type identification information of the VDU.

According to a second aspect, a virtualized network function resource management device is provided. The device includes:
an input/output device, configured to send a preprocessing request message to a manager device, where the preprocessing request message is used to request the manager device to perform resource pre-scaling in on a virtualized network function VNF instance, and the resource pre-scaling in includes a migrating service carried in a virtualization container on which resource pre-scaling in needs to be performed; and
a processor, configured to perform resource scaling in on the VNF instance after determining that the EM device completes the resource pre-scaling in.

In the VNF resource management device in this embodiment of this application, the manager device is requested to perform preprocessing on the virtualization container on which resource scaling in needs to be performed in a virtualization container corresponding to the VNF instance and migrate the service carried in the virtualization container, to avoid damage of a function of the VNF instance during resource scaling in,
wherein the manager device is an element manager, EM, device and
the input/output device is further configured to receive a preprocessing acknowledgment message sent by the EM device, wherein the preprocessing acknowledgment message is used to notify the virtualized network function resource management device that the resource pre-scaling in has been completed; and
the processor is further configured to perform the resource pre-scaling in on the VNF instance based on the preprocessing acknowledgment message received by the input/output device.

Optionally, the processor is further configured to perform the resource scaling in on the VNF instance after a time period elapses after the input/output device sends the preprocessing request message to the EM device.

Optionally, the input/output device is further configured to receive a resource scaling in request message sent by a network functions virtualization orchestrator NFVO device, where the resource scaling in request message includes an identifier list of the virtualization container on which resource pre-scaling in needs to be performed, and the preprocessing request message includes the identifier list of the virtualization container.

Optionally, the resource scaling in request message further includes a time parameter, and the time parameter is used to determine a time period; and the processor is further configured to perform the resource scaling in on the VNF instance after the time period elapses after the input/output device sends the preprocessing request message to the EM device.

Optionally, the preprocessing request message includes an identifier list of the virtualization container on which resource pre-scaling in needs to be performed, and the identifier list is used to identify the virtualization container on which resource pre-scaling in needs to be performed.

Optionally, the input/output device is further configured to receive a resource scaling in request message sent by the EM device, where the resource scaling in request message includes identification information of a virtualization deployment unit VDU, and a virtualization container created based on the VDU identified by the identification information include the virtualization container identified by the identifier list.

Optionally, the resource scaling in request message further includes a quantity parameter or a proportion parameter, where the quantity parameter is used to indicate, to the processor, a quantity of virtualization containers on which resource pre-scaling in needs to be performed; and the proportion parameter is used to indicate, to the processor, a proportion of the virtualization container on which resource pre-scaling in needs to be performed in all the virtualization container created based on the VDU identified by the identification information.

Optionally, the input/output device is further configured to send a VNF life cycle management operation granting request message to the NFVO device, where the VNF life cycle management operation granting request message is used to request granting of the resource scaling in from the NFVO device; and receive a VNF life cycle management operation granting response message sent by the NFVO device.

Optionally, the identification information includes at least one of the following information: VDU identification information of the VDU, group identification information of the VDU, and type identification information of the VDU.

According to a third aspect, a computer program product is provided. The computer program product includes computer program code, and when the computer program code is run by a transceiver unit and a processing unit or a transceiver and a processor that are of a controller configured in an adapter, the controller is enabled to perform any virtualized network function resource management method according to the first aspect and various implementations of the first aspect.

### BRIEF DESCRIPTION OF DRAWINGS

To describe the technical solutions in the embodiments of this application more clearly, the following briefly describes the accompanying drawings required for describing the embodiments. Apparently, the accompanying drawings in the following description show merely some embodiments of this application, and a person of ordinary skill in the art may derive other drawings from these accompanying drawings without creative efforts.
FIG. 1 is a schematic diagram of an application scenario to which an embodiment of this application is applied;
FIG. 2 is a schematic interaction diagram of a virtualized network function resource management method according to an embodiment of this application;
FIG. 3 is a schematic interaction diagram of a virtualized network function resource management method according to another embodiment of this application;
FIG. 4 is a schematic interaction diagram of a virtualized network function resource management method according to still another embodiment of this application;
FIG. 5 is a schematic interaction diagram of a virtualized network function resource management method according to still another embodiment of this application;
FIG. 6 is a schematic interaction diagram of a virtualized network function resource management method according to still another embodiment of this application;
FIG. 7 is a schematic interaction diagram of a virtualized network function resource management method according to still another embodiment of this application;
FIG. 8 is a schematic block diagram of a virtualized network function resource management device according to an embodiment of this application;
FIG. 9 is a schematic block diagram of a virtualized network function resource management device according to another embodiment of this application; and
FIG. 10 is a schematic block diagram of a virtualized network function resource management device according to still another embodiment of this application.

### DESCRIPTION OF EMBODIMENTS

For ease of understanding the embodiments of this application, several elements used in the embodiments of this application are first described herein.

A virtualization container (virtualization container) is a part of a computing node, and is configured to provide an isolated virtualized computing environment. A typical example of the virtualization container is a virtual machine. A virtual machine (Virtual Machine, VM) refers to a virtual device simulated on a physical device by using virtual machine software. For an application program running in a virtual machine, the virtual machine works as a real physical device. An operating system and an application program may be installed on the virtual machine, and the virtual machine may further access a network resource.

A virtualized network function (Virtualized Network Function, VNF) may also be referred to as a virtualized network element, and corresponds to a physical network function in a conventional non-virtualized network. A functional behavior and a status of a network function are unrelated to virtualization of the network function. The VNF may include a plurality of lower-level components. Optionally, one VNF may be deployed on a plurality of VMs, and each VM hosts (host) one VNF component (Virtualized Network Function Component, VNFC). Optionally, one VNF may alternatively be deployed on one VM.

A virtualized network function descriptor (Virtualized Network Function Descriptor, VNFD) is a deployment template of the VNF. Optionally, the VNFD and the VNF are in a one-to-one correspondence. The VNFD describes a virtual resource parameter and requirement that are required for implementing the VNF, and is mainly used to set up a VNF instance and manage a life cycle of the VNF.

A virtualization deployment unit (Virtualization Deployment Unit, VDU) is an important component of the VNFD, and is used to describe a behavior and a requirement in deployment and operation of the VNFC. The deployment includes a resource requirement and a resource restriction, and the operation includes a software image. A VNFC instance is created based on the VDU.

A virtualized network function manager (Virtualized Network Function Manager, VNFM) is configured to implement life cycle management of the VNF, including management and processing of the VNFD, initialization of the VNF instance, scaling out or scaling in of the VNF, and termination of the VNF instance. The VNFM is further configured to receive and execute a elastic scaling policy delivered by a higher layer, to implement elastic scaling of the VNF.

An element manager (Element Manager) performs conventional FCAPS (Fault Management, Configuration Management, Accounting Management, Performance Management and Security Management, fault management, configuration management, accounting management, performance management and security management) functions for the VNF. An EM module may exist alone, or may be a VNF having an EM function.

A network functions virtualization orchestrator (Network Functions Virtualization Orchestrator, NFVO) is used for life cycle management of a network service, and cooperates with the VNFM to implement the life cycle management of the VNF and a global view function of a resource.

Scaling out/in (scaling out/in) operation: The VNFM scales out or scales in a resource instance, that is, scales out or scales in a VM corresponding to the VDU, to implement elastic scaling of a resource.

Scaling up/down (scaling up/down) operation: The VNFM changes a resource allocated to a single resource instance, for example, scales up or scales down a capability of a memory, storage, or CPU (Central Processing Unit, central processing unit) of the VM, to implement elastic scaling of the resource.

A method in the embodiments of this application may further be applied to an application container engine Docker architecture or another virtualized architecture in addition to a virtual machine architecture. Therefore, the following virtualization container (virtualization container) may refer to a virtual machine in a hypervisor-based virtualization technology or a Docker container in a container-based (container-based) virtualization technology.

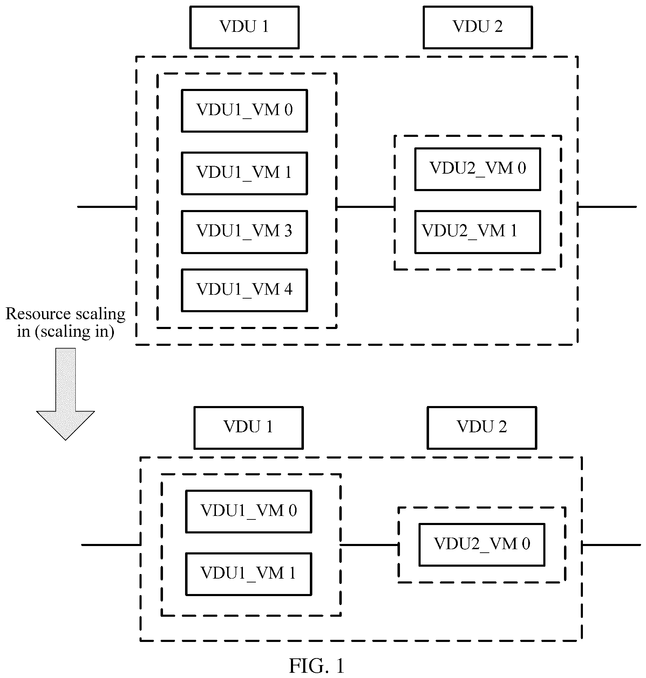

FIG. 1 is a schematic diagram of an application scenario to which an embodiment of this application is applied. A VDU is essentially a virtual resource requirement template, and VMs instantiated based on different VDUs provide different services. There is an association between VDUs providing a same type of service. As shown in FIG. 1, a VDU 1 and a VDU 2 are respectively VDUs having a forwarding function. The VDU 1 corresponds to four VMs (that is, a VDU1_VM 0, a VDU1_VM 1, a VDU1_VM 3, and a VDU1_VM 4), and the VDU 2 corresponds to two VMs (that is, a VDU2_VM 0 and a VDU2_VM 1). When a scaling in (scaling in) operation is performed on the VDU 1, a scaling in operation also needs to be performed on the VDU 2. Otherwise, resources of the VMs corresponding to the VDU 2 are wasted.

When the scaling in operation is performed on the VDU 2, services in a to-be-scaled-in VM first need to be transferred to another virtual machine, for example, services in the to-be-scaled-in VDU2_VM 1 are migrated to the VDU2_VM 0, and then the VDU2_VM 1 is scaled in. In this way, it can be ensured that the service carried in the VDU 2 are undamaged during resource scaling in.

In addition, a quantity of VMs needing to be scaled in from the VDU 2 is also associated with a quantity of VMs scaled in from the VDU 1. For example, when two VMs (that is, the VDU1_VM 3 and the VDU1_VM 4) need to be scaled in from the VDU 1, one VM (that is, the VDU2_VM 1) also needs to be scaled in from the VDU 2.

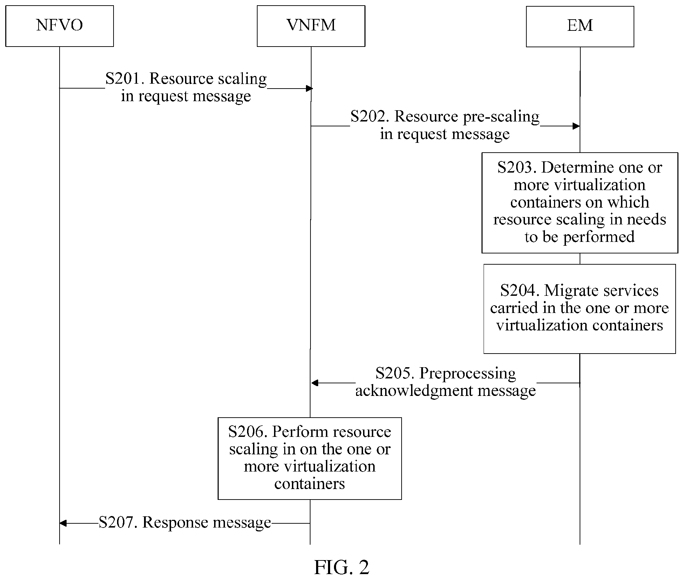

A virtualized network function resource management method according to the embodiments of this application is described in detail below with reference to FIG. 2 to FIG. 4.

FIG. 2 is a schematic diagram of a VNF resource management method according to an embodiment of this application. As shown in FIG. 2, the method 200 in this embodiment includes the following steps.

S201. An NFVO device sends a resource scaling in request message (VNF scaling in request) to a VNFM device, to request to perform a resource scaling in operation on a VNF instance. A resource scaling in parameter carried in the resource scaling in request message includes an identifier (vnfInstanceId) of the VNF instance, and may further include one or more of the following parameters: a proportion parameter (scaleStep), a time parameter (timeout), and identification information of a VDU, and the identification information of the VDU includes at least one of a VDU identifier (vduld) of the VDU, a group identifier (vduGroupId) of the VDU, and a type identifier (vduTypeId) of the VDU.

The proportion parameter is used to indicate, in one or more virtualization containers created based on a single VDU, a proportion of one or more virtualization containers on which resource pre-scaling in needs to be performed in all the one or more virtualization containers created based on the single VDU. For example, current resource scaling in is performed based on a VDU type, and it may be designated that in one or more virtualization containers created based on each VDU in the VDU type, a quantity of virtualization containers on which resource pre-scaling in is to be performed needs to account for x% of a total quantity of the one or more virtualization containers created based on each VDU, where x is a natural number greater than 0. The resource scaling in request message may further include a quantity parameter, and a quantity of virtualization containers on which resource scaling in needs to be performed in one or more virtualization containers corresponding to the VNF instance is directly indicated to the VNFM device by using the quantity parameter. Therefore, the quantity of virtualization containers on which resource scaling in needs to be performed can be flexibly determined based on an actual case.

The time parameter is used to determine a time period. After the VNFM device sends the preprocessing request message to the EM device and after the time period, the VNFM device performs resource scaling in on the VNF instance. If not receiving a preprocessing acknowledgment message within the time period, the VNFM device may send a resource scaling in error message to the NFVO device, or may directly request a virtualized infrastructure manager (Virtualized Infrastructure Manager, VIM) device to release a resource used by a virtualization container, to avoid a resource waste due to an excessively long wait time, thereby improving resource utilization. The virtualization container may be a virtualization container that is determined by the VNFM device and that carries relatively few services or carries unimportant services in the VNF instance, or may be a virtualization container determined by the VNFM device according to indication information of the NFVO device. The foregoing embodiment is merely an example for description, and this embodiment of this application is not limited thereto.

The VDU may be grouped or classified in different dimensions based on a deployment requirement, and a VDU group to which the VDU belongs may be indicated in a VNFD, or a type to which the VDU belongs is indicated in the VNFD. Alternatively, the VDU may be grouped and classified together. Optionally, the VDU may be grouped or classified in terms of a service type supported by the VDU, dependency, or an active-standby relationship. During resource scaling in, a granularity (that is, the VDU, the VDU group, or the VDU type) on which processing is based may be indicated, to flexibly determine, based on an actual case, the virtualization container on which resource scaling in needs to be performed.

A VDU group to which each VDU belongs includes at least two VDUs whose VDU identifiers are different. Alternatively, a VDU type to which each VDU belongs also includes at least two VDUs whose VDU identifiers are different. Optionally, each VDU can belong to only one VDU group or VDU type at most.

For example, a VDU group identifier attribute may be added to an information element (Information Element, IE) description of the VDU, to describe an identifier of the VDU group to which the VDU belongs. As shown in Table 1, a VDU identifier is a mandatory attribute, and a VDU group identifier is an optional attribute. When the IE description of the VDU does not include the attribute or a value of the VDU group identifier attribute is null (that is, a cardinality is 0), it indicates that the VDU does not belong to any VDU group. As shown in Table 2, an IE of VDU group information may alternatively be added to the VNFD. The IE may include the VDU group identifier attribute and a VDU list (vduList) attribute. A VDU list is used to indicate a VDU included in a VDU group. As shown in Table 3, an attribute type (vduType) may further be added to the IE of the VDU, to describe the type to which the VDU belongs, so that when performing a VNF resource scaling in operation, the VNFM performs a resource scaling in operation on a type of VDUs as a group of VDUs.

**Table 1**

| Attribute (Attribute) | Qualifier (Qualifier) | Cardinality (Cardinality) | Data type (Content) | Description (Description) |
|---|---|---|---|---|
| VDU identifier (vduId) | Mandatory attribute (M) | 1 | Identifier (Identifier) | Identifier or name of a VDU, unique in a VNFD |
| VDU group identifier (vduGroup Id) | Optional attribute (O) | 0 or 1 | Character string (String) | Identifier or name of a VDU group in which the VDU is located, unique in the VNFD |

**Table 2**

| Attribute (Attribute) | Qualifier (Qualifier) | Cardinality (Cardinality) | Data type (Content) | Description (Description) |
|---|---|---|---|---|
| VDU identifier (vduId) | Mandatory attribute (M) | 1 | Identifier (Identifier) | Identifier or name of a VDU, unique in a VNFD |
| VDU group identifier (vduGroup Id) | Mandatory attribute (M) | 1 | Character string (String) | Identifier or name of a VDU group in which the VDU is located, unique in the VNFD |
| VDU list (vduList) | Mandatory attribute (M) | 1 | Boolean (Bool) | Identifier list of one or more VDUs included in the VDU group |

**Table 3**

| Attribute (Attribute) | Qualifier (Qualifier) | Cardinality (Cardinality) | Data type (Content) | Description (Description) |
|---|---|---|---|---|
| VDU identifier (vduld) | Mandatory attribute (M) | 1 | Identifier (Identifier) | Identifier or name of a VDU, unique in a VNFD |
| VDU type (vduType) | Optional attribute (O) | 0 or 1 | Character string (String) | Used to indicate a type to which the VDU belongs |

The foregoing embodiment is merely an example for description, and this embodiment of this application is not limited thereto. Any method for performing resource scaling in on a VDU group or type based on a requirement belongs to the protection scope of this application. For example, the VDU group attribute and the VDU type attribute may be both added to the IE of the VDU.

S202. After receiving the resource scaling in request message, the VNFM device sends a resource pre-scaling in request message (VNF pre-scaling in request) to an EM device. The resource pre-scaling in request message may include the identifier (vnfInstanceId) of the VNF instance, and may further include one or more of the following parameters: the proportion parameter (scaleStep) and the identification information of the VDU.

The resource pre-scaling in request message is used to request the EM device to perform resource pre-scaling in on the VNF instance indicated by the identifier of the VNF instance, and migrate services carried in one or more virtualization containers corresponding to the VNF instance. The proportion parameter is used to indicate, in one or more virtualization containers created based on a single VDU, a proportion of one or more virtualization containers on which resource pre-scaling in needs to be performed in all the one or more virtualization containers created based on the single VDU. The identification information of the VDU indicates a granularity of preprocessing performed by the EM device (that is, performing preprocessing on one or more virtualization containers created based on the VDU, a VDU group, or a VDU type). Optionally, for the proportion parameter (scaleStep) and the identification information of the VDU in S202, refer to the content in S201.

S203. The EM device determines, based on the resource scaling in request message, one or more virtualization containers on which resource pre-scaling in needs to be performed.

Optionally, the EM device may determine, based on the group identifier of the VDU, that one or more virtualization containers carrying relatively few services in one or more virtualization containers created based on a group to which the VDU belongs are a first virtualization container (that is, the one or more virtualization containers on which resource pre-scaling in needs to be performed), may determine that one or more virtualization containers carrying unimportant services are a first virtualization container, or may determine that one or more virtualization containers carrying unimportant services in virtualization containers carrying relatively few services are a first virtualization container.

In this application, the first virtualization container is used to clearly and briefly describe technical content rather than indicate a sequence.

S204. Migrate services carried in the first virtualization container.

Migrating services carried in a virtualization container belongs to the prior art, and details are not described herein.

S205. The EM device sends a preprocessing (pre-scale) acknowledgment message to the VNFM device. The preprocessing acknowledgment message carries an identifier list (IdList) of the one or more virtualization containers on which the preprocessing has been completed, to notify the VNFM device that a resource occupied by the corresponding one or more virtualization containers in the identifier list and a resource of a related virtual link can be released.

S206. The VNFM device requests, based on the preprocessing acknowledgment message, a VIM device to release the resource occupied by the one or more virtualization containers and the resource of the related virtual link. If not receiving the preprocessing acknowledgment message within a longest wait time stipulated by the time parameter, the VNFM device may send a resource scaling in operation error message to the NFVO device, or directly request the VIM device to release a resource occupied by the VNF instance (that is, perform resource scaling in on the VNF instance).

S207. The VNFM device sends a response message (response) to the NFVO device, to notify the NFVO device of a result of the resource scaling in.

Optionally, in the method 200, the proportion parameter, the quantity parameter, the identification information of the VDU, and the time parameter may alternatively be defined in the VNFD. The EM device may read the VNFD to obtain the foregoing parameters without adding the foregoing parameters to the request message, to reduce overheads of system signaling. The EM device may alternatively be a VNF device having an element management function.

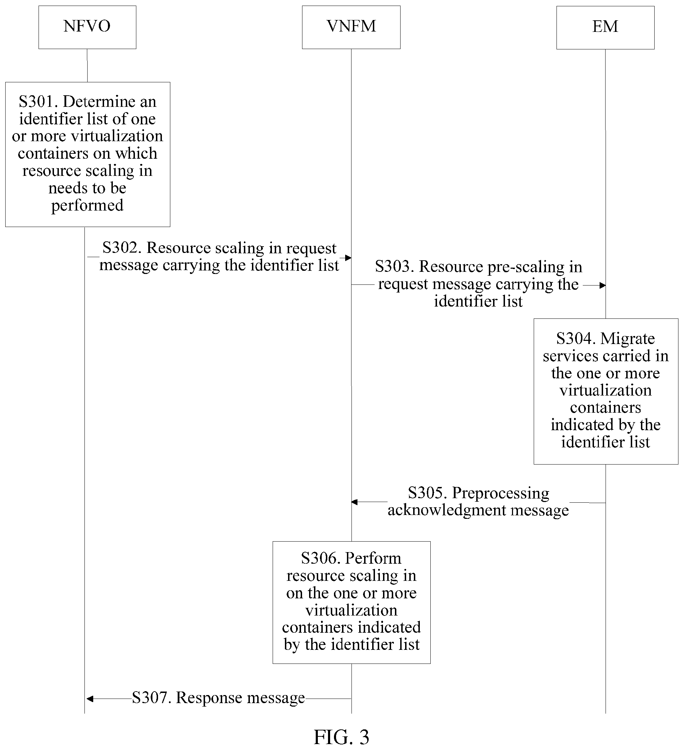

FIG. 3 is a schematic diagram of a VNF resource management method according to another embodiment of this application. For content in this embodiment the same as that in the embodiment in FIG. 2, refer to a corresponding part in the embodiment in FIG. 2, and details are not described herein again. As shown in FIG. 3, the method 300 in this embodiment includes the following steps.

S301. An NFVO device determines an identifier list (IdList) of one or more virtualization containers on which resource scaling in needs to be performed.

The NFVO device may determine, according to identification information of a VDU, a first virtualization container (that is, the one or more virtualization containers on which resource scaling in needs to be performed) in one or more virtualization containers created based on the VDU. A method for determining the first virtualization container is the same as a method for determining the first virtualization container by the EM device in the method 200. The NFVO device generates the identifier list after determining the first virtualization container.

S302. The NFVO device sends a resource scaling in request message (VNF scaling in request) to a VNFM device, to request to perform resource scaling in on a VNF instance. A resource scaling in parameter carried in the resource scaling in request message may include an identifier (vnfInstanceId) of the VNF instance and the identifier list determined by the NFVO device in S301, and the identifier list is used to identify a first virtualization container on which resource pre-scaling in needs to be performed. The resource scaling in request message may further include one or more of the following parameters: a proportion parameter (scaleStep), a time parameter (timeout), and identification information of a VDU, where the identification information of the VDU includes at least one of a VDU identifier (vduId) of the VDU, a group identifier (vduGroupId) of the VDU, and a type identifier (vduTypeId) of the VDU.

S303. After receiving the resource scaling in request message, the VNFM device sends a resource pre-scaling in request message (VNF pre-scaling in request) to an EM device. The resource pre-scaling in request message includes the identifier (vnfInstanceId) of the VNF instance and the identifier list.

S304. The EM device migrates, based on the resource pre-scaling in request message, services carried in the first virtualization container.

Specifically, the EM device determines, based on the identifier list, the first virtualization container on which resource pre-scaling in needs to be performed. Migrating services carried in a virtualization container belongs to the prior art, and details are not described herein.

S305. The EM device sends a preprocessing (pre-scale) acknowledgment message to the VNFM device, to notify the VNFM device that a resource occupied by the first virtualization container and a resource of a virtual link can be released.

S306. The VNFM device requests, based on the preprocessing acknowledgment message, a VIM device to release the resource occupied by the first virtualization container and the resource of the related virtual link. If not receiving the preprocessing acknowledgment message within a longest wait time stipulated by the time parameter, the VNFM device may send a resource scaling in operation error message to the NFVO device; or determine a to-be-released virtualization container according to a rule, for example, designate a virtualization container carrying relatively few services as a virtualization container whose resource needs to be released, and directly request the VIM device to release the resource.

S307. The VNFM device sends a response message (response) to the NFVO device, to notify a result of the resource scaling in.

Optionally, in the method 300, the time parameter may alternatively be defined in a VNFD. The NFVO device may read the VNFD to obtain the foregoing parameter without adding the foregoing parameter to the request message, to reduce overheads of system signaling. The EM device may alternatively be a VNF device having an element management function.

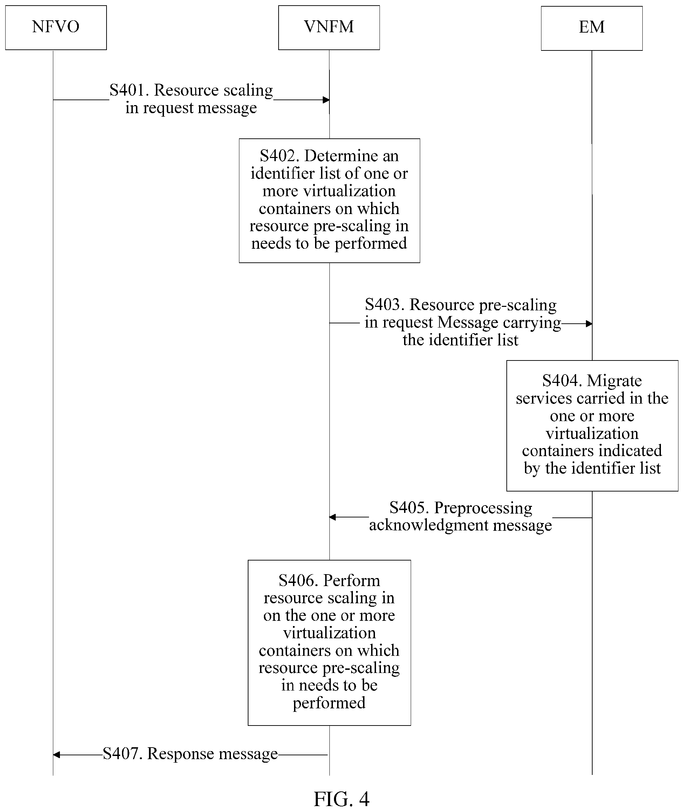

FIG. 4 is a schematic diagram of a VNF resource management method according to still another embodiment of this application. For content in this embodiment the same as those in the embodiments in FIG. 2 and FIG. 3, refer to corresponding parts in the embodiments in FIG. 2 and FIG. 3, and details are not described herein again. As shown in FIG. 4, the method 400 in this embodiment includes the following steps.

S401. An NFVO device sends a resource scaling in request message (VNF scaling in request) to a VNFM device, to request to perform a resource scaling in operation on a VNF instance. A resource scaling in parameter carried in the resource scaling in request message includes an identifier (vnfInstanceId) of the VNF instance, and may further include one or more of the following parameters: a proportion parameter (scaleStep), a time parameter (timeout), and identification information of a VDU, and the identification information of the VDU includes at least one of a VDU identifier (vduId) of the VDU, a group identifier (vduGroupId) of the VDU, and a type identifier (vduTypeId) of the VDU.

S402. After receiving the resource scaling in request message, the VNFM device determines an identifier list (IdList) of one or more virtualization containers on which resource pre-scaling in needs to be performed, where the VNFM device may determine, according to the identification information of the VDU, a first virtualization container (that is, the one or more virtualization containers on which resource scaling in needs to be performed) in one or more virtualization containers created based on the VDU. A method for determining the first virtualization container is the same as a method for determining the first virtualization container by the EM device in the method 200, and the VNFM device generates the identifier list after determining the first virtualization container.

S403. The VNFM device sends a resource pre-scaling in request message (VNF pre-scaling in request) to an EM device. The resource pre-scaling in request message carries the identifier (vnfInstanceId) of the VNF instance and the identifier list.

S404. The EM device migrates, based on the resource pre-scaling in request message, services carried in the first virtualization container.

S405. The EM device sends a preprocessing (pre-scale) acknowledgment message to the VNFM device, to notify the VNFM device that a resource occupied by the first virtualization container and a resource of a virtual link can be released.

S406. The VNFM device requests, based on the preprocessing acknowledgment message, a VIM device to release the resource occupied by the first virtualization container and the resource of the related virtual link. If not receiving the preprocessing acknowledgment message within a longest wait time stipulated by a the time parameter, the VNFM device may send a resource scaling in operation error message to the NFVO device, or directly request the VIM device to release the resources.

S407. The VNFM device sends a response message (response) to the NFVO device, to notify a result of the resource scaling in.

Optionally, in the method 400, the proportion parameter, the identification information of the VDU, and the time parameter may alternatively be defined in a VNFD. The VNFM device may read the VNFD to obtain the foregoing parameters without adding the foregoing parameters to the request message, to reduce overheads of system signaling. The EM device may alternatively be a VNF device having an element management function.

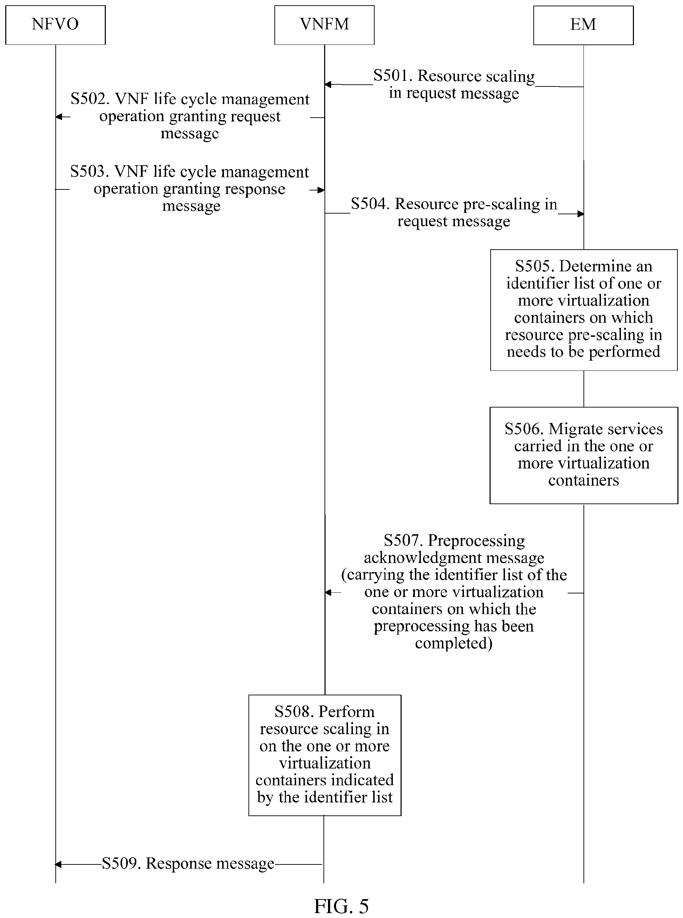

FIG. 5 is a schematic diagram of a VNF resource management method according to still another embodiment of this application. For content in this embodiment the same as those in the embodiments in FIG. 2 to FIG. 4, refer to corresponding parts in the embodiments in FIG. 2 to FIG. 4, and details are not described herein again. As shown in FIG. 5, the method 500 in this embodiment includes the following steps.

S501. An EM device sends a resource scaling in request message (VNF scaling in request) to a VNFM device, to request to perform resource scaling in on a VNF instance. A resource scaling in parameter carried in the resource scaling in request message includes an identifier (vnfInstanceId) of the VNF instance, and may further include one or more of the following parameters: a proportion parameter (scaleStep), a time parameter (timeout), and identification information of a VDU, where the identification information of the VDU includes at least one of a VDU identifier (vduId) of the VDU, a group identifier (vduGroupId) of the VDU, and a type identifier (vduTypeId) of the VDU.

S502. After receiving the resource scaling in request message, the VNFM device sends a VNF life cycle management operation granting request message (Granting Request) to an NFVO device, to request granting of resource scaling in on the VNF instance.

S503. After receiving the operation granting request message, and if determining to grant permission to the VNFM device, the NFVO device sends a VNF life cycle management operation granting response message (Granting Response) to the VNFM device.

S504. The VNFM device sends a resource pre-scaling in request message (VNF pre-scaling in request) to the EM device based on the granting response message.

S505. The EM device determines, based on the preprocessing request message, a first virtualization container on which resource pre-scaling in needs to be performed (that is, one or more virtualization containers on which resource pre-scaling in needs to be performed) in the VNF instance. A method for determining the first virtualization container is the same as a method for determining the first virtualization container by the EM device in the method 200.

S506. Migrate services carried in the first virtualization container.

S507. The EM device sends a preprocessing (pre-scale) acknowledgment message to the VNFM device. The preprocessing acknowledgment message carries an identifier list (IdList) of the first virtualization container on which the preprocessing has been completed, to notify the VNFM device that a resource occupied by the first virtualization container and a resource of a virtual link can be released.

S508. The VNFM device requests, based on the preprocessing acknowledgment message, a VIM device to release the resource occupied by the first virtualization container and the resource of the related virtual link. If not receiving the preprocessing acknowledgment message within a longest wait time stipulated by the time parameter, the VNFM device may send a resource scaling in operation error message to the NFVO device; or determine a to-be-released virtualization container according to a rule, for example, designate a virtualization container carrying relatively few services as a virtualization container whose resource needs to be released, and directly request the VIM device to release the resource.

S509. The VNFM device sends a response message (response) to the NFVO device, to notify a result of the resource scaling in.

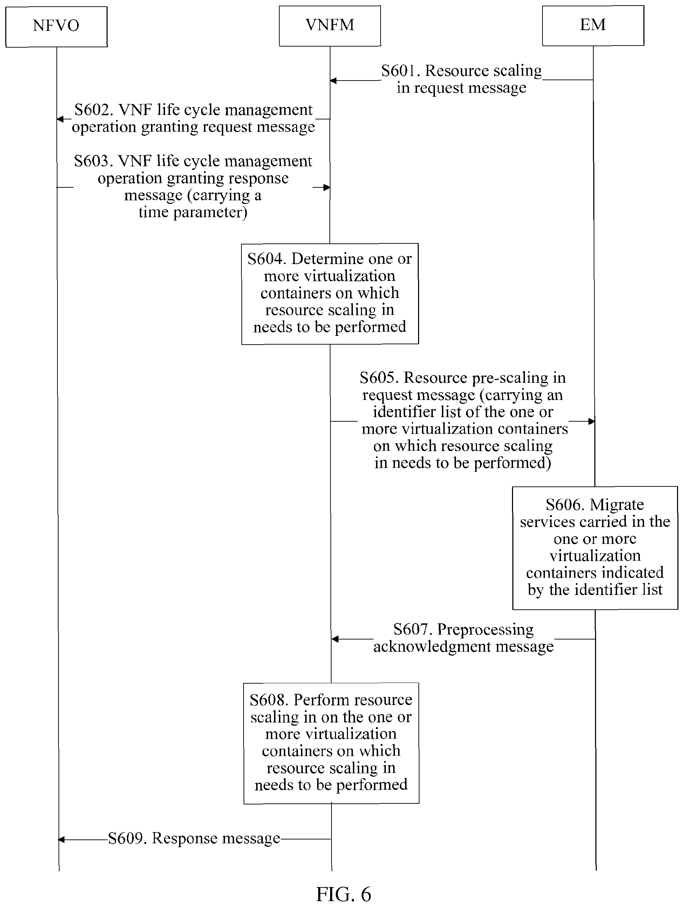

FIG. 6 is a schematic diagram of a VNF resource management method according to still another embodiment of this application. For content in this embodiment the same as those in the embodiments in FIG. 2 to FIG. 6, refer to corresponding parts in the embodiments in FIG. 2 to FIG. 6, and details are not described herein again. As shown in FIG. 6, the method 600 in this embodiment includes the following steps.

S601. An EM device sends a resource scaling in request message (VNF scaling in request) to a VNFM device, to request to perform resource scaling in on a VNF instance. A resource scaling in parameter carried in the resource scaling in request message includes an identifier (vnfInstanceId) of the VNF instance, and may further include one or more of the following parameters: a proportion parameter (scaleStep), a time parameter (timeout), and identification information of a VDU, where the identification information of the VDU includes at least one of a VDU identifier (vduId) of the VDU, a group identifier (vduGroupId) of the VDU, and a type identifier (vduTypeId) of the VDU.

S602. After receiving the resource scaling in request message, the VNFM device sends a VNF life cycle management operation granting request message (Granting Request) to an NFVO device, to request granting of resource scaling in on the VNF instance.

S603. After receiving the operation granting request message, and if determining to grant permission to the VNFM device, the NFVO device sends a VNF life cycle management operation granting response message (Granting Response) to the VNFM device. The granting response message carries the time parameter (timeout).

S604. After receiving the granting response message, the VNFM device determines a first virtualization container (that is, one or more virtualization containers on which resource pre-scaling in needs to be performed). A method for determining the first virtualization container is the same as a method for determining the first virtualization container by the EM device in the method 200.

S605. The VNFM device sends a resource pre-scaling in request message (VNF pre-scaling in request) to the EM device. The resource pre-scaling in request message includes an identifier list (IdList) of the first virtualization container.

S606. The EM device migrates, based on the preprocessing request message, services carried in the first virtualization container.

S607. The EM device sends a preprocessing (pre-scale) acknowledgment message to the VNFM device, to notify the VNFM device that a resource occupied by the first virtualization container and a resource of a virtual link can be released.

S608. The VNFM device requests, based on the preprocessing acknowledgment message, a VIM device to release the resource occupied by the one or more virtualization containers and the resource of the related virtual link. If not receiving the preprocessing acknowledgment message within a longest wait time stipulated by the time parameter, the VNFM device may send a resource scaling in operation error message to the NFVO device, or directly request the VIM device to release the resources.

S609. The VNFM device sends a response message (response) to the NFVO device, to notify a result of the resource scaling in.

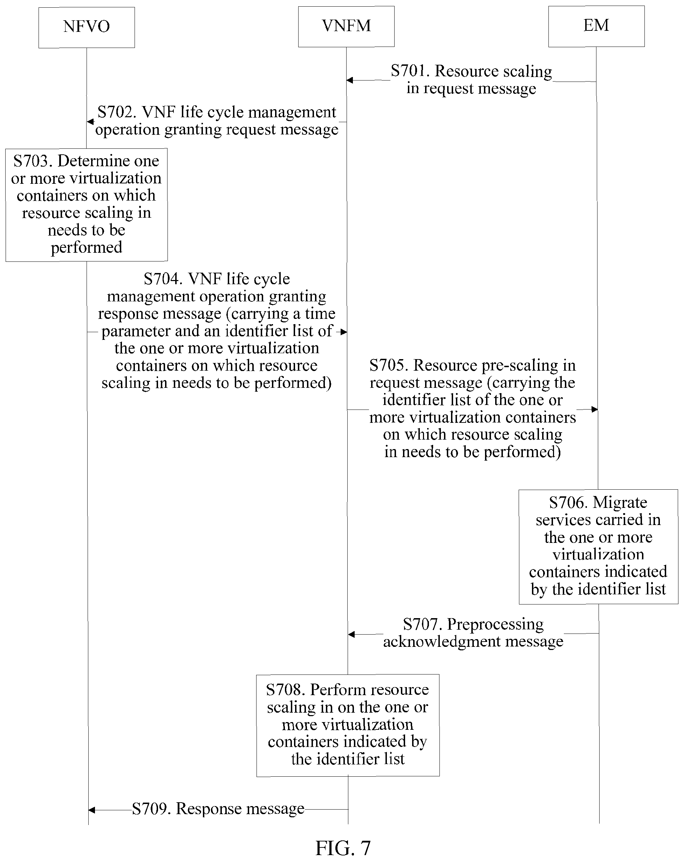

FIG. 7 is a schematic diagram of a VNF resource management method according to still another embodiment of this application. For content in this embodiment the same as those in the embodiments in FIG. 2 to FIG. 6, refer to corresponding parts in the embodiments in FIG. 2 to FIG. 6, and details are not described herein again. As shown in FIG. 7, the method 700 in this embodiment includes the following steps.
S701. An EM device sends a resource scaling in request message (VNF scaling in request) to a VNFM device, to request to perform resource scaling in on a VNF instance. A resource scaling in parameter carried in the resource scaling in request message includes an identifier (vnfInstanceId) of the VNF instance, and may further include one or more of the following parameters: a proportion parameter (scaleStep), a time parameter (timeout), and identification information of a VDU, where the identification information of the VDU includes at least one of a VDU identifier (vduId) of the VDU, a group identifier (vduGroupId) of the VDU, and a type identifier (vduTypeId) of the VDU.
S702. After receiving the resource scaling in request message, the VNFM device sends a VNF life cycle management operation granting request message (Granting Request) to an NFVO device, to request granting of resource scaling in on the VNF instance.
S703. After receiving the operation granting response message, and if determining to grant permission to the VNFM device, the NFVO device may determine a first virtualization container (that is, one or more virtualization containers on which resource pre-scaling in needs to be performed). A method for determining the first virtualization container is the same as a method for determining the first virtualization container by the EM device in the method 200.
S704. The NFVO device sends a VNF life cycle management operation granting response message (Granting Response) to the VNFM device. The granting response message carries the time parameter (timeout) and an identifier list (IdList) of the first virtualization container.
S705. After receiving the granting response message, the VNFM device sends a resource pre-scaling in request message (VNF pre-scaling in request) to the EM device. The resource pre-scaling in request message carries the identifier list.
S706. The EM device determines, based on the identifier list carried in the preprocessing request message, the one or more virtualization containers on which resource pre-scaling in needs to be performed in the VNF instance, and migrates services carried in the one or more virtualization containers.
S707. The EM device sends a preprocessing (pre-scale) acknowledgment message to the VNFM device, to notify the VNFM device that a resource occupied by the corresponding one or more virtualization containers in the identifier list and a resource of a virtual link can be released.
S708. The VNFM device requests, based on the preprocessing acknowledgment message, a VIM device to release the resource occupied by the one or more virtualization containers and the resource of the related virtual link; and if not receiving the preprocessing acknowledgment message within a longest wait time stipulated by a time parameter, the VNFM device may send a resource scaling in operation error message to the NFVO device or directly request the VIM device to release the resources.
S709. The VNFM device sends a response message (response) to the NFVO device, to notify a result of the resource scaling in.

The foregoing embodiments are merely examples, and the embodiments of this application are not limited thereto. In the VNF resource management method provided in the embodiments of this application, preprocessing is performed on the one or more virtualization containers on which resource scaling in needs to be performed in the VNF instance, and the services carried in the one or more virtualization containers are migrated, thereby avoiding, during resource scaling in, damage of the services carried in the one or more virtualization containers corresponding to the VNF instance. In addition, a resource waste caused when the VNFM device performs resource scaling in on virtualization containers created based on a plurality of associated VDUs can be avoided through resource scaling in based on a VDU group or a VDU type.

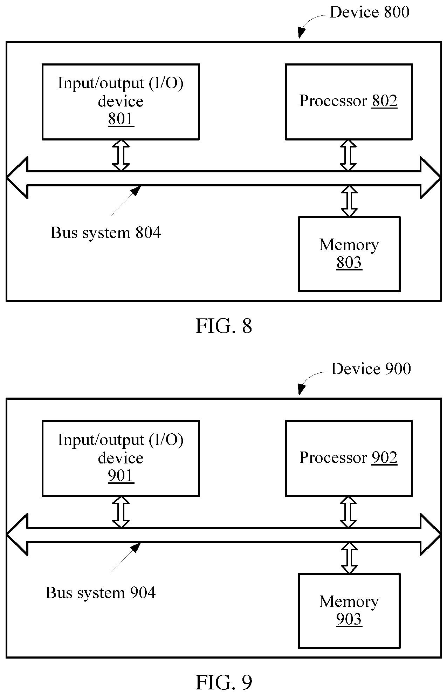

The VNF resource management method according to the embodiments of this application is described in detail above with reference to FIG. 2 to FIG. 7, and a VNF resource management device provided in the embodiments of this application is described in detail below with reference to FIG. 8 to FIG. 10. For VNF resource management devices in embodiments in FIG. 8 to FIG. 10, specifically refer to running processes of VNF resource management devices in FIG. 2 to FIG. 7.

As shown in FIG. 8, an embodiment of this application further provides a VNF resource management device 800. The device 800 may include an input/output (I/O) device 801, a processor 802, a memory 803, and a bus system 804.

The memory 803 is configured to store a program. Specifically, the program may include program code, and the program code includes a computer operation instruction. The memory 803 may be a random access memory (random access memory, RAM for short), or may be a non-volatile memory (non-volatile memory), for example, at least one magnetic disk storage. Only one memory is shown in the figure. Certainly, a plurality of memories may alternatively be provided as required. The memory 803 may alternatively be a memory in the processor 802.

The memory 803 stores the following elements: executable modules or data structures, or a subset thereof, or an extended set thereof:
an operation instruction, including various operation instructions and used to implement various operations; and
an operating system, including various system programs and configured to implement various basic services and process a hardware-based task.

In this embodiment of this application, the processor 802 performs the following operations by invoking the operation instruction (where the operation instruction may be stored in the operating system) stored in the memory 803:
sending, by using the input/output device 801, a preprocessing request message to an element manager EM device, where the preprocessing request message is used to request the EM device to perform resource pre-scaling in on a virtualized network function VNF instance, and the resource pre-scaling in includes migrating services carried in one or more virtualization containers on which resource pre-scaling in needs to be performed; and
performing, by the processor 802, resource scaling in on the VNF instance after determining that the EM device completes the resource pre-scaling in.

In the VNF resource management device 800 in this embodiment of this application, the EM device is requested to perform preprocessing on the one or more virtualization containers on which resource scaling in needs to be performed in one or more virtualization containers corresponding to the VNF instance and migrate the services carried in the one or more virtualization containers, to avoid damage of a function of the VNF instance during resource scaling in.

The processor 802 controls an operation of the device 800. The processor 802 may also be referred to as a CPU (Central Processing Unit, central processing unit). In a specific application, the components of the device 800 are coupled by using the bus system 804, and the bus system 804 may further include a power bus, a control bus, a status signal bus, and the like in addition to a data bus. However, for clear description, various types of buses in the figure are marked as the bus system 804. For convenience of representation, the bus is represented by using only one thick line in FIG. 8. However, it does not indicate that the bus system 804 has only one bus or only one type of bus.

The methods disclosed in the foregoing embodiments of this application may be applied to the processor 802 or implemented by the processor 802. The processor 802 may be an integrated circuit chip and has a signal processing capability. In an implementation process, steps in the foregoing methods may be completed by using an integrated logic circuit of hardware in the processor 802 or instructions in a form of software in the processor 802. The foregoing processor 802 may be a general purpose processor, a digital signal processor (DSP), an application-specific integrated circuit (ASIC), a field programmable gate array (FPGA) or another programmable logic device, a discrete gate or a transistor logic device, or a discrete hardware component, and may implement or perform the methods, steps, and logical block diagrams disclosed in the embodiments of this application. The general purpose processor may be a microprocessor or the processor may be any conventional processor, or the like. The steps of the methods disclosed in the embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory or an electrically erasable programmable memory, or a register. The storage medium is located in the memory 803, and the processor 802 reads information in the memory 803 and completes the steps in the foregoing methods in combination with hardware of the processor 803. To avoid repetition, details are not described herein again.

Optionally, the performing, by the processor 802, resource pre-scaling in on the VNF instance after determining that the EM device completes the resource pre-scaling in includes:
receiving, by the input/output device 801, a preprocessing acknowledgment message sent by the EM device, where the preprocessing acknowledgment message is used to notify the device 800 that the resource pre-scaling in has been completed; and
performing, by the processor 802, the resource pre-scaling in on the VNF instance based on the preprocessing acknowledgment message received by the input/output device 801.

Optionally, the performing, by the processor 802, resource pre-scaling in on the VNF instance after determining that the EM device completes the resource pre-scaling in includes:
performing, by the processor 802, the resource scaling in on the VNF instance after a time period elapses after the input/output device 801 sends the preprocessing request message to the EM device.

Optionally, before sending the preprocessing request message to the EM device, the input/output device 801 is further configured to receive a resource scaling in request message sent by a network functions virtualization orchestrator NFVO device, where the resource scaling in request message includes an identifier list of the one or more virtualization containers on which resource scaling in needs to be performed.

The preprocessing request message includes the identifier list of the one or more virtualization containers.

Optionally, the resource scaling in request message further includes a time parameter, and the time parameter is used to determine a time period.

The performing, by the processor 802, resource scaling in on the VNF instance after determining that the EM device completes the resource pre-scaling in includes:
performing, by the processor 802, the resource scaling in on the VNF instance after the time period elapses after the input/output device 801 sends the preprocessing request message to the EM device.

Optionally, the preprocessing request message includes an identifier list of the one or more virtualization containers on which resource pre-scaling in needs to be performed, and the identifier list is used to identify the one or more virtualization containers on which the EM device needs to perform resource pre-scaling in.

Optionally, before sending the preprocessing request message to the EM device, the input/output device 801 is further configured to receive a resource scaling in request message sent by the EM device, where the resource scaling in request message includes identification information of a virtualization deployment unit VDU, one or more virtualization containers created based on the VDU identified by the identification information include the one or more virtualization containers identified by the identifier list, and the resource scaling in request message is used to request the device 800 to perform resource scaling in on the one or more virtualization containers created based on the VDU indicated by the identification information in the VNF instance.

Optionally, the resource scaling in request message further includes a quantity parameter or a proportion parameter, where
the quantity parameter is used to indicate, to the processor 802, a quantity of virtualization containers on which resource pre-scaling in needs to be performed; and
the proportion parameter is used to indicate, to the processor 802, a proportion of the one or more virtualization containers on which resource pre-scaling in needs to be performed in all the one or more virtualization containers created based on the VDU identified by the identification information.

Optionally, after receiving the resource scaling in request message sent by the EM device and before sending the preprocessing request message to the EM device, the input/output device 801 is further configured to:
send a VNF life cycle management operation granting request message to an NFVO device, where the VNF life cycle management operation granting request message is used to request granting of the resource scaling in from the NFVO device; and
receive a VNF life cycle management operation granting response message sent by the NFVO device.

Optionally, the identification information includes at least one of the following information: VDU identification information of the VDU, group identification information of the VDU, and type identification information of the VDU.

The VNF resource management device 800 according to this embodiment of this application may correspond to the VNFM device in the VNF resource management method in the embodiments of this application, and the foregoing and other operations and/or functions of the modules in the device 800 are respectively used to implement corresponding procedures of the steps performed by the VNFM device in the method 200 to the method 700. For brevity, details are not described herein again.

Therefore, in the VNF resource management device 800 provided in this embodiment of this application, preprocessing is performed on the one or more virtualization containers on which resource scaling in needs to be performed in the one or more virtualization containers corresponding to the VNF instance, and the services carried in the one or more virtualization containers are migrated, to avoid, during resource scaling in, damage of services carried in the VNF instance. In addition, a resource waste caused when a resource scaling in operation is performed on the VNF instance can be avoided through a resource scaling in operation based on a VDU group or a VDU type.

As shown in FIG. 9, an embodiment of this application further provides a VNF resource management device 900. The device 900 may include an input/output (I/O) device 901, a processor 902, a memory 903, and a bus system 904.

The memory 903 is configured to store a program. Specifically, the program may include program code, and the program code includes a computer operation instruction. The memory 903 may be a random access memory (random access memory, RAM for short), or may be a non-volatile memory (non-volatile memory), for example, at least one magnetic disk storage. Only one memory is shown in the figure. Certainly, a plurality of memories may alternatively be provided as required. The memory 903 may alternatively be a memory in the processor 902.

The memory 903 stores the following elements: executable modules or data structures, or a subset thereof, or an extended set thereof:
an operation instruction, including various operation instructions and used to implement various operations; and
an operating system, including various system programs and configured to implement various basic services and process a hardware-based task.

In this embodiment of this application, the processor 902 performs the following operations by invoking the operation instruction (where the operation instruction may be stored in the operating system) stored in the memory 903:
receiving, by using the input/output device 901, a preprocessing request message sent by a virtualized network function manager VNFM device, where the preprocessing request message is used to request the device 900 to perform resource pre-scaling in on a virtualized network function VNF instance;
determining, by the processor 902, a first virtualization container based on the preprocessing request message received by the input/output device 901, where the first virtualization container is one or more virtualization containers on which resource pre-scaling in needs to be performed in one or more virtualization containers corresponding to the VNF instance; and
migrating, by the processor 902, services carried in the first virtualization container.

In the VNF resource management device 900 in this embodiment of this application, preprocessing is performed on the one or more virtualization containers on which resource scaling in needs to be performed in the one or more virtualization containers corresponding to the VNF instance, and the services carried in the one or more virtualization containers are migrated, to ensure that a function of the VNF instance is not damaged during resource scaling in.

The processor 902 controls an operation of the device 900. The processor 902 may also be referred to as a CPU (Central Processing Unit, central processing unit). The memory 903 may include a read-only memory and a random access memory, and provide an instruction and data to the processor 902. A part of the memory 903 may further include a non-volatile random access memory (NVRAM). In a specific application, the components of the device 900 are coupled by using the bus system 904, and the bus system 904 may further include a power bus, a control bus, a status signal bus, and the like in addition to a data bus. However, for clear description, various types of buses in the figure are marked as the bus system 904. For convenience of representation, the bus is represented by using only one thick line in FIG. 9. However, it does not indicate that the bus system 904 has only one bus or only one type of bus.

The methods disclosed in the foregoing embodiments of this application may be applied to the processor 902 or implemented by the processor 902. The processor 902 may be an integrated circuit chip and has a signal processing capability. In an implementation process, steps in the foregoing methods may be completed by using an integrated logic circuit of hardware in the processor 902 or instructions in a form of software in the processor 902. The foregoing processor 902 may be a general purpose processor, a digital signal processor (DSP), an application-specific integrated circuit (ASIC), a field programmable gate array (FPGA) or another programmable logic device, a discrete gate or a transistor logic device, or a discrete hardware component, and may implement or perform the methods, steps, and logical block diagrams disclosed in the embodiments of this application. The general purpose processor may be a microprocessor or the processor may be any conventional processor, or the like. Steps of the methods disclosed in the embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory or an electrically erasable programmable memory, or a register. The storage medium is located in the memory 903, and the processor 902 reads information in the memory 903 and completes the steps in the foregoing methods in combination with hardware of the processor 902. To avoid repetition, details are not described herein again.

Optionally, the preprocessing request message further includes identification information of a virtualization deployment unit VDU.

The determining, by the processor 902, a first virtualization container based on the preprocessing request message includes:
determining, by the processor 902 according to the identification information, the first virtualization container in one or more virtualization containers created based on the VDU identified by the identification information.

Optionally, the determining, by the processor 902, the first virtualization container in one or more virtualization containers created based on the VDU identified by the identification information includes:
determining, by the processor 902 based on a service volume of services carried in the one or more virtualization containers and/or importance of the services carried in the one or more virtualization containers, the first virtualization container in the one or more virtualization containers created based on the VDU identified by the identification information.

Optionally, the preprocessing request message further includes a quantity parameter or a proportion parameter, where
the quantity parameter is used to indicate, to the processor 902, a quantity of virtualization containers on which resource pre-scaling in needs to be performed; and
the proportion parameter is used to indicate, to the processor 902, a proportion of the one or more virtualization containers on which resource pre-scaling in needs to be performed in all the one or more virtualization containers created based on the VDU indicated by the identification information.

Optionally, the preprocessing request message further includes an identifier list of the one or more virtualization containers on which resource pre-scaling in needs to be performed.

The determining, by the processor 902, a first virtualization container based on the preprocessing request message includes:
determining, by the processor 902, that the one or more virtualization containers identified by the identifier list are the first virtualization container.

Optionally, before receiving the preprocessing request message sent by the VNFM device, the input/output device 901 is further configured to:
send a resource scaling in request message to the VNFM device, where the resource scaling in request message includes identification information of a VDU, one or more virtualization containers created based on the VDU indicated by the identification information include the one or more virtualization containers indicated by the identifier list, and the resource scaling in request message is used to request the VNFM device to perform resource scaling in on the one or more virtualization containers created based on the VDU indicated by the identification information.

Optionally, the resource scaling in request message further includes a quantity parameter or a proportion parameter, where
the quantity parameter is used to indicate, to the VNFM device, a quantity of virtualization containers on which resource pre-scaling in needs to be performed; and
the proportion parameter is used to indicate, to the VNFM device, a proportion of the one or more virtualization containers on which resource pre-scaling in needs to be performed in all the one or more virtualization containers created based on the VDU identified by the identification information.

Optionally, the identification information of the VDU includes at least one of the following information: VDU identification information of the VDU, group identification information of the VDU, and type identification information of the VDU.

Optionally, after the processor 902 migrates the services carried in the first virtualization container, the input/output device 901 is further configured to:
send a preprocessing acknowledgment message to the VNFM device, where the preprocessing acknowledgment message is used to notify the VNFM device that the resource pre-scaling in has been completed.

The VNF resource management device 900 according to this embodiment of this application may correspond to the EM device in the VNF resource management method in the embodiments of this application, and the foregoing and other operations and/or functions of the modules in the device 900 are respectively used to implement corresponding procedures of the steps performed by the EM device in the method 200 to the method 700. For brevity, details are not described herein again.

Therefore, in the VNF resource management device 900 provided in this embodiment of this application, preprocessing is performed on the one or more virtualization containers on which resource scaling in needs to be performed in the one or more virtualization containers corresponding to the VNF instance, and the services carried in the one or more virtualization containers are migrated, to avoid, during resource scaling in, damage of services carried in the VNF instance. In addition, a resource waste caused when a resource scaling in operation is performed on the VNF instance can be avoided through a resource scaling in operation based on a VDU group or a VDU type.

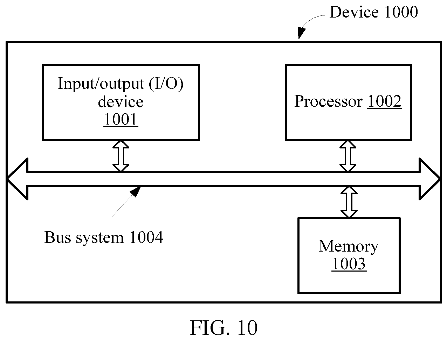

As shown in FIG. 10, an embodiment of this application further provides a VNF resource management device 1000. The device 1000 may include an input/output (I/O) device 1001, a processor 1002, a memory 1003, and a bus system 1004.

The memory 1003 is configured to store a program. Specifically, the program may include program code, and the program code includes a computer operation instruction. The memory 1003 may be a random access memory (random access memory, RAM for short), or may be a non-volatile memory (non-volatile memory), for example, at least one magnetic disk storage. Only one memory is shown in the figure. Certainly, a plurality of memories may be provided as required. The memory 1003 may alternatively be a memory in the processor 1002.

The memory 1003 stores the following elements, executable modules or data structures, or a subset thereof, or an extended set thereof:
an operation instruction, including various operation instructions and used to implement various operations; and
an operating system, including various system programs and configured to implement various basic services and process a hardware-based task.

In this embodiment of this application, the processor 1002 performs the following operations by invoking the operation instruction (where the operation instruction may be stored in the operating system) stored in the memory 1003:
receiving, by using the input/output device 1001, a preprocessing request message sent by a virtualized network function manager VNFM device, where the preprocessing request message is used to request the device 1000 to perform resource pre-scaling in on a virtualized network function VNF instance;
determining, by the processor 1002, an identifier list of one or more virtualization containers on which resource pre-scaling in needs to be performed in one or more virtualization containers corresponding to the virtualized network function VNF instance; and
sending, by the input/output device 1001 to the virtualized network function manager VNFM device, the identifier list determined by the processor 1002, so that the VNFM device requests an element manager EM device to perform resource pre-scaling in on the one or more virtualization containers identified by the identifier list.

In the VNF resource management device 1000 in this embodiment of this application, preprocessing is performed on the one or more virtualization containers on which resource scaling in needs to be performed in the one or more virtualization containers corresponding to the VNF instance and the services carried in the one or more virtualization containers are migrated, to ensure that a function of the VNF instance is not damaged during resource scaling in.

The processor 1002 controls an operation of the device 1000. The processor 1002 may also be referred to as a CPU (Central Processing Unit, central processing unit). The memory 1003 may include a read-only memory and a random access memory, and provide an instruction and data to the processor 1002. A part of the memory 1003 may further include a non-volatile random access memory (NVRAM). In a specific application, the components of the device 1000 are coupled by using the bus system 1004, and the bus system 1004 may further include a power bus, a control bus, a status signal bus, and the like in addition to a data bus. However, for clear description, various types of buses in the figure are marked as the bus system 1004. For convenience of representation, the bus is represented by using only one thick line in FIG. 10. However, it does not indicate that the bus system 1004 has only one bus or only one type of bus.

The methods disclosed in the foregoing embodiments of this application may be applied to the processor 1002 or implemented by the processor 1002. The processor 1002 may be an integrated circuit chip and has a signal processing capability. In an implementation process, steps in the foregoing methods may be completed by using an integrated logic circuit of hardware in the processor 1002 or instructions in a form of software in the processor 1010. The foregoing processor 1002 may be a general purpose processor, a digital signal processor (DSP), an application-specific integrated circuit (ASIC), a field programmable gate array (FPGA) or another programmable logic device, a discrete gate or a transistor logic device, or a discrete hardware component, and may implement or perform the methods, steps, and logical block diagrams disclosed in the embodiments of this application. The general purpose processor may be a microprocessor or the processor may be any conventional processor, or the like. Steps of the methods disclosed in the embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory or an electrically erasable programmable memory, or a register. The storage medium is located in the memory 1003, and the processor 1002 reads information in the memory 1003 and completes the steps in the foregoing methods in combination with hardware of the processor. To avoid repetition, details are not described herein again.

Optionally, before the processor 1002 determines the identifier list, the input/output device 1001 is further configured to:
receive a VNF life cycle management operation granting request message sent by the VNFM device, where the VNF life cycle management operation granting request message is used to request granting of resource scaling in from the processor 1002, and the resource scaling in is resource scaling in performed by the VNFM device on the one or more virtualization containers corresponding to the VNF instance; and
send a VNF life cycle management operation granting response message to the VNFM device, where the VNF life cycle management operation granting response message is used for the granting of the resource scaling in.

The sending, by the input/output device 1001, the identifier list to the VNFM device includes:
sending, by the input/output device 1001, the VNF life cycle management operation granting response message including the identifier list to the VNFM device.

Optionally, after the processor 1002 determines the identifier list, the input/output device 1001 is further configured to:
send a resource scaling in request message to the VNFM device, where the resource scaling in request message is used to request the VNFM device to perform resource scaling in on the one or more virtualization containers corresponding to the VNF instance.

The sending, by the input/output device 1001, the identifier list to the VNFM device includes:
sending, by the input/output device 1001, the resource scaling in request message including the identifier list to the VNFM device.

Optionally, the resource scaling in request message further includes a time parameter, where the time parameter is used to instruct the VNFM device to perform, after the VNFM device sends the preprocessing request message to the EM device and after a time period indicated by the time parameter, the resource scaling in on the one or more virtualization containers corresponding to the VNF instance.

The VNF resource management device 1000 according to this embodiment of this application may correspond to the NFVO device in the VNF resource management method in the embodiments of this application, and the foregoing and other operations and/or functions of the modules in the device 1000 are respectively used to implement corresponding procedures of the steps performed by the NFVO device in the method 200 to the method 700. For brevity, details are not described herein again.

Therefore, in the VNF resource management device 1000 provided in this embodiment of this application, preprocessing is performed on the one or more virtualization containers on which resource scaling in needs to be performed in the one or more virtualization containers corresponding to the VNF instance, and the services carried in the one or more virtualization containers are migrated, to avoid, during resource scaling in, damage of services carried in the VNF instance. In addition, a resource waste caused when a resource scaling in operation is performed on the VNF instance can be avoided through a resource scaling in operation based on a VDU group or a VDU type.

Sequence numbers of the processes do not mean execution sequences in various embodiments of this application. The execution sequences of the processes should be determined based on functions and internal logic of the processes, and should not constitute any limitation on implementation processes of the embodiments of this application.

In addition, the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between associated objects.

It should be understood that in the embodiments of this application, "B corresponding to A" indicates that B is associated with A, and B may be determined based on A. However, it should also be understood that determining B based on A does not mean that B is determined based on A only, and B may also be determined based on A and/or other information.

A person of ordinary skill in the art may be aware that, the units and algorithm steps in the examples described with reference to the embodiments disclosed herein may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communications connections may be implemented through some interfaces, indirect couplings or communication connections between the apparatuses or units, electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on actual needs to achieve the objectives of the solutions of the embodiments of this application.

In addition, the function units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

To make the application document brief and clear, technical features and descriptions in one of the foregoing embodiments may be considered to be applicable to other embodiments, and details are not described in the other embodiments.

The foregoing descriptions are merely specific implementations of this application, but are not intended to limit the protection scope of this application. Therefor, the protection scope of this application shall be subject to the protection scope of the claims.

## Claims

1. A virtualized network function resource management method, comprising:
sending, by a virtualized network function manager, VNFM, device (800, 900, 1000), a preprocessing request message to a manager device, wherein the preprocessing request message is used to request the manager device to perform resource pre-scaling in on a virtualized network function, VNF, instance, and the resource pre-scaling in comprises a migrating service carried in a virtualization container on which resource pre-scaling in needs to be performed; and
performing, by the VNFM device (800, 900, 1000), resource scaling in on the VNF instance after determining that the manager device completes the resource pre-scaling in,
**characterized in that** the manager device is an element manager, EM, device, and the
performing, by the VNFM device (800, 900, 1000), resource scaling in on the VNF instance after determining that the EM device completes the resource pre-scaling in comprises:
receiving, by the VNFM device (800, 900, 1000), a preprocessing acknowledgment message sent by the EM device, wherein the preprocessing acknowledgment message is used to notify the VNFM device that the resource pre-scaling in has been completed; and
performing, by the VNFM device (800, 900, 1000), the resource scaling in on the VNF instance based on the preprocessing acknowledgment message.

2. The method according to claim 1, wherein the performing, by the VNFM device (800, 900, 1000), resource scaling in on the VNF instance after determining that the EM device completes the resource pre-scaling in comprises:
performing, by the VNFM device (800, 900, 1000), the resource scaling in on the VNF instance after a time period elapses after the VNFM device sends the preprocessing request message to the EM device.

3. The method according to any one of claim 1 or claim 2, wherein before the sending, by a VNFM device (800, 900, 1000), a preprocessing request message to an EM device, the method further comprises:
receiving, by the VNFM device (800, 900, 1000), a resource scaling in request message sent by a network functions virtualization orchestrator, NFVO, device, wherein the resource scaling in request message comprises an identifier list of a virtualization container on which resource pre-scaling in needs to be performed, wherein
the preprocessing request message comprises the identifier list of the virtualization container.

4. The method according to claim 3, wherein the resource scaling in request message further comprises a time parameter, and the time parameter is used to determine a time period; and
the performing, by the VNFM device (800, 900, 1000), resource scaling in on the VNF instance after determining that the EM device completes the resource pre-scaling in comprises:
performing, by the VNFM device (800, 900, 1000), the resource scaling in on the VNF instance after the time period elapses after the VNFM device sends the preprocessing request message to the EM device.

5. The method according to claim 1, wherein the preprocessing request message comprises an identifier list of the virtualization container on which resource pre-scaling in needs to be performed, and the identifier list is used to identify the virtualization container on which resource pre-scaling in needs to be performed.

6. The method according to claim 5, wherein before the sending, by a VNFM device (800, 900, 1000), a preprocessing request message to an EM device, the method further comprises:
receiving, by the VNFM device (800, 900, 1000), a resource scaling in request message sent by the EM device, wherein the resource scaling in request message comprises identification information of a virtualization deployment unit, VDU, and a virtualization container created based on the VDU identified by the identification information comprise the virtualization container identified by the identifier list.

7. The method according to claim 6, wherein the resource scaling in request message further comprises a quantity parameter or a proportion parameter, wherein
the quantity parameter is used to indicate, to the VNFM device (800, 900, 1000), a quantity of virtualization containers on which resource pre-scaling in needs to be performed; and
the proportion parameter is used to indicate, to the VNFM device (800, 900, 1000), a proportion of the virtualization containers on which resource pre-scaling in needs to be performed in all the virtualization container created based on the VDU identified by the identification information.

8. A virtualized network function resource management device (800, 900, 1000), comprising:
an input/output device (1001), configured to send a preprocessing request message to a manager device, wherein the preprocessing request message is used to request the manager device to perform resource pre-scaling in on a virtualized network function, VNF, instance, and the resource pre-scaling in comprises a migrating service carried in a virtualization container on which resource pre-scaling in needs to be performed; and
a processor (802-803, 902, 1002, 1010), configured to perform resource scaling in on the VNF instance after determining that the manager device completes the resource pre-scaling in,
**characterized in that** the manager device is an element manager, EM, device and
the input/output device (1001) is further configured to receive a preprocessing acknowledgment message sent by the EM device, wherein the preprocessing acknowledgment message is used to notify the virtualized network function resource management device that the resource pre-scaling in has been completed; and
the processor (802-803, 902, 1002, 1010) is further configured to perform the resource pre-scaling in on the VNF instance based on the preprocessing acknowledgment message received by the input/output device (1001).

9. The device (800, 900, 1000) according to claim 8, wherein
the processor (802-803, 902, 1002, 1010) is further configured to perform the resource scaling in on the VNF instance after a time period elapses after the input/output device (1001) sends the preprocessing request message to the EM device.

10. The device (800, 900, 1000) according to any one of claim 8 or claim 9, wherein
the input/output device (1001) is further configured to receive a resource scaling in request message sent by a network functions virtualization orchestrator, NFVO, device, wherein the resource scaling in request message comprises an identifier list of the virtualization container on which resource pre-scaling in needs to be performed; and
the preprocessing request message comprises the identifier list of the virtualization container.

11. The device (800, 900, 1000) according to claim 10, wherein the resource scaling in request message further comprises a time parameter, and the time parameter is used to determine a time period; and
the processor (802-803, 902, 1002, 1010) is further configured to perform the resource scaling in on the VNF instance after the time period elapses after the input/output device (1001) sends the preprocessing request message to the EM device.

12. The device (800, 900, 1000) according to claim 9, wherein the preprocessing request message comprises an identifier list of the virtualization container on which resource pre-scaling in needs to be performed, and the identifier list is used to identify the virtualization container on which resource pre-scaling in needs to be performed.

13. A computer program product, comprising computer program code, which, when executed by a computer unit, will cause the computer unit to perform the method of any one of claims 1 to 7.

## Patentansprüche

1. Verfahren zur Verwaltung einer Funktionsressource eines virtualisierten Netzwerks, umfassend:
Senden, durch eine Vorrichtung eines Managers für Funktionen eines virtualisierten Netzwerks, VNFM, (800, 900, 1000) einer Vorverarbeitungsanforderungsnachricht an eine Managervorrichtung, wobei die Vorverarbeitungsanforderungsnachricht verwendet wird, um von der Managervorrichtung anzufordern, eine Ressourcenvorskalierung nach innen auf einer Instanz einer Funktion eines virtualisierten Netzwerks, VNF, durchzuführen, und die Ressourcenvorskalierung nach innen einen Migrationsdienst umfasst, der in einem Virtualisierungscontainer enthalten ist, auf dem eine Ressourcenvorskalierung nach innen durchgeführt werden muss; und
Durchführen, durch die VNFM-Vorrichtung (800, 900, 1000), einer Ressourcenskalierung nach innen auf der VNF-Instanz, nach einem Bestimmen, dass die Managervorrichtung die Ressourcenvorskalierung nach innen abschließt,
**dadurch gekennzeichnet, dass** die Managervorrichtung eine Vorrichtung eines Elementmanagers, EM, ist und das
Durchführen, durch die VNFM-Vorrichtung (800, 900, 1000), einer Ressourcenskalierung nach innen auf der VNF-Instanz, nach einem Bestimmen, dass die EM-Vorrichtung die Ressourcenvorskalierung nach innen abschließt, umfasst:
Empfangen, durch die VNFM-Vorrichtung (800, 900, 1000), einer von der EM-Vorrichtung gesendeten Vorverarbeitungsbestätigungsnachricht, wobei die Vorverarbeitungsbestätigungsnachricht verwendet wird, um die VNFM-Vorrichtung darüber zu benachrichtigen, dass die Ressourcenvorskalierung nach innen abgeschlossen wurde; und
Durchführen, durch die VNFM-Vorrichtung (800, 900, 1000), der Ressourcenskalierung nach innen auf der VNF-Instanz basierend auf der Vorverarbeitungsbestätigungsnachricht.

2. Verfahren nach Anspruch 1, wobei das Durchführen, durch die VNFM-Vorrichtung (800, 900, 1000), einer Ressourcenskalierung nach innen auf der VNF-Instanz, nach einem Bestimmen, dass die EM-Vorrichtung die Ressourcenvorskalierung nach innen abschließt, umfasst:
Durchführen, durch die VNFM-Vorrichtung (800, 900, 1000), der Ressourcenskalierung nach innen auf der VNF-Instanz, nachdem ein Zeitraum abläuft, nach dem die VNFM-Vorrichtung die Vorverarbeitungsanforderungsnachricht an die EM-Vorrichtung sendet.

3. Verfahren nach einem der Ansprüche 1 oder 2, wobei, vor dem Senden, durch eine VNFM-Vorrichtung (800, 900, 1000), einer Vorverarbeitungsanforderungsnachricht an eine EM-Vorrichtung, das Verfahren ferner umfasst:
Empfangen, durch die VNFM-Vorrichtung (800, 900, 1000), einer von einer Vorrichtung eines Virtualisierungsorchestrators für Netzwerkfunktionen, NFVO, gesendeten Anforderungsnachricht zur Ressourcenskalierung nach innen, wobei die Anforderungsnachricht zur Ressourcenskalierung nach innen eine Identifikatorliste eines Virtualisierungscontainers umfasst, auf dem eine Ressourcenvorskalierung nach innen durchgeführt werden muss, wobei
die Vorverarbeitungsanforderungsnachricht die Identifikatorliste des Virtualisierungscontainers umfasst.

4. Verfahren nach Anspruch 3, wobei die Anforderungsnachricht zur Ressourcenskalierung nach innen ferner einen Zeitparameter umfasst und der Zeitparameter verwendet wird, um einen Zeitraum zu bestimmen; und
das Durchführen, durch die VNFM-Vorrichtung (800, 900, 1000), einer Ressourcenskalierung nach innen auf der VNF-Instanz, nach einem Bestimmen, dass die EM-Vorrichtung die Ressourcenvorskalierung nach innen abschließt, umfasst:
Durchführen, durch die VNFM-Vorrichtung (800, 900, 1000), der Ressourcenskalierung nach innen auf der VNF-Instanz, nachdem der Zeitraum abläuft, nach dem die VNFM-Vorrichtung die Vorverarbeitungsanforderungsnachricht an die EM-Vorrichtung sendet.

5. Verfahren nach Anspruch 1, wobei die Vorverarbeitungsanforderungsnachricht eine Identifikatorliste des Virtualisierungscontainers umfasst, auf dem eine Ressourcenvorskalierung nach innen durchgeführt werden muss, und die Identifikatorliste verwendet wird, um den Virtualisierungscontainer zu identifizieren, auf dem eine Ressourcenvorskalierung nach innen durchgeführt werden muss.

6. Verfahren nach Anspruch 5, wobei, vor dem Senden, durch eine VNFM-Vorrichtung (800, 900, 1000), einer Vorverarbeitungsanforderungsnachricht an eine EM-Vorrichtung, das Verfahren ferner umfasst:
Empfangen, durch die VNFM-Vorrichtung (800, 900, 1000), einer von der EM-Vorrichtung gesendeten Anforderungsnachricht zur Ressourcenskalierung nach innen, wobei die Anforderungsnachricht zur Ressourcenskalierung nach innen Identifikationsinformationen einer Virtualisierungsbereitstellungseinheit, VDU,
umfasst und ein basierend auf der durch die Identifikationsinformationen identifizierten VDU erstellter Virtualisierungscontainer den durch die Identifikatorliste identifizierten Virtualisierungscontainer umfasst.

7. Verfahren nach Anspruch 6, wobei die Anforderungsnachricht zur Ressourcenskalierung nach innen ferner einen Mengenparameter oder einen Anteilsparameter umfasst, wobei
der Mengenparameter verwendet wird, um der VNFM-Vorrichtung (800, 900, 1000) eine Menge von Virtualisierungscontainern anzugeben, auf denen eine Ressourcenvorskalierung nach innen durchgeführt werden muss; und
der Anteilsparameter verwendet wird, um der VNFM-Vorrichtung (800, 900, 1000) einen Anteil der Virtualisierungscontainer anzugeben, auf denen eine Ressourcenvorskalierung nach innen in allen Virtualisierungscontainern, die basierend auf der durch die Identifikationsinformationen identifizierten VDU erstellt werden, durchgeführt werden muss.

8. Vorrichtung zur Verwaltung einer Funktionsressource eines virtualisierten Netzwerks (800, 900, 1000), umfassend:
eine Eingabe-/Ausgabevorrichtung (1001), die dazu ausgelegt ist, eine Vorverarbeitungsanforderungsnachricht an eine Managervorrichtung zu senden, wobei die Vorverarbeitungsanforderungsnachricht verwendet wird, um von der Managervorrichtung anzufordern, eine Ressourcenvorskalierung nach innen auf einer Instanz einer Funktion eines virtualisierten Netzwerks, VNF, durchzuführen, und die Ressourcenvorskalierung nach innen einen Migrationsdienst umfasst, der in einem Virtualisierungscontainer enthalten ist, auf dem eine Ressourcenvorskalierung nach innen durchgeführt werden muss; und
einen Prozessor (802-803, 902, 1002, 1010), der dazu ausgelegt ist, eine Ressourcenskalierung nach innen auf der VNF-Instanz, nach einem Bestimmen, dass die Managervorrichtung die Ressourcenvorskalierung nach innen abschließt, durchzuführen,
**dadurch gekennzeichnet, dass** die Managervorrichtung eine Vorrichtung eines Elementmanagers, EM, ist und
die Eingabe-/Ausgabevorrichtung (1001) ferner dazu ausgelegt ist, eine von der EM-Vorrichtung gesendete Vorverarbeitungsbestätigungsnachricht zu empfangen, wobei die Vorverarbeitungsbestätigungsnachricht verwendet wird, um die Vorrichtung zur Verwaltung einer Funktionsressource eines virtualisierten Netzwerks darüber zu benachrichtigen, dass die Ressourcenvorskalierung nach innen abgeschlossen wurde; und
der Prozessor (802-803, 902, 1002, 1010) ferner dazu ausgelegt ist, die Ressourcenvorskalierung nach innen auf der VNF-Instanz basierend auf der von der Eingabe-/Ausgabevorrichtung (1001) empfangenen Vorverarbeitungsbestätigungsnachricht durchzuführen.

9. Vorrichtung (800, 900, 1000) nach Anspruch 8, wobei
der Prozessor (802-803, 902, 1002, 1010) ferner dazu ausgelegt ist, die Ressourcenskalierung nach innen auf der VNF-Instanz durchzuführen, nachdem ein Zeitraum abläuft, nach dem die Eingabe-/Ausgabevorrichtung (1001) die Vorverarbeitungsanforderungsnachricht an die EM-Vorrichtung sendet.

10. Vorrichtung (800, 900, 1000) nach einem der Ansprüche 8 oder 9, wobei die Eingabe-/Ausgabevorrichtung (1001) ferner dazu ausgelegt ist, eine von einer Vorrichtung eines Virtualisierungsorchestrators für Netzwerkfunktionen, NFVO, gesendete Anforderungsnachricht zur Ressourcenskalierung nach innen zu empfangen, wobei die Anforderungsnachricht zur Ressourcenskalierung nach innen eine Identifikatorliste des Virtualisierungscontainers umfasst, auf dem eine Ressourcenvorskalierung nach innen durchgeführt werden muss; und
die Vorverarbeitungsanforderungsnachricht die Identifikatorliste des Virtualisierungscontainers umfasst.

11. Vorrichtung (800, 900, 1000) nach Anspruch 10, wobei die Anforderungsnachricht zur Ressourcenskalierung nach innen ferner einen Zeitparameter umfasst und der Zeitparameter verwendet wird, um einen Zeitraum zu bestimmen; und
der Prozessor (802-803, 902, 1002, 1010) ferner dazu ausgelegt ist, die Ressourcenskalierung nach innen auf der VNF-Instanz durchzuführen, nachdem der Zeitraum abläuft, nach dem die Eingabe-/Ausgabevorrichtung (1001) die Vorverarbeitungsanforderungsnachricht an die EM-Vorrichtung sendet.

12. Vorrichtung (800, 900, 1000) nach Anspruch 9, wobei die Vorverarbeitungsanforderungsnachricht eine Identifikatorliste des Virtualisierungscontainers umfasst, auf dem eine Ressourcenvorskalierung nach innen durchgeführt werden muss, und die Identifikatorliste verwendet wird, um den Virtualisierungscontainer zu identifizieren, auf dem eine Ressourcenvorskalierung nach innen durchgeführt werden muss.

13. Computerprogrammprodukt, umfassend einen Computerprogrammcode, der, bei Ausführung durch eine Computereinheit, die Computereinheit dazu veranlasst, das Verfahren nach einem der Ansprüche 1 bis 7 durchzuführen.

## Revendications

1. Procédé de gestion de ressources de fonctions de réseau virtualisé, comprenant :
l'envoi, par un dispositif gestionnaire de fonctions de réseau virtualisé, VNFM (800, 900, 1000) d'un message de requête de prétraitement à un dispositif gestionnaire, le message de requête de prétraitement étant utilisé pour demander au dispositif gestionnaire d'effectuer une pré-mise à l'échelle de ressources sur une instance de fonctions de réseau virtualisé, VNF, et la pré-mise à l'échelle de ressources comprenant un service de migration acheminé dans un conteneur de virtualisation sur lequel une pré-mise à l'échelle de ressources doit être effectuée ; et
l'exécution, par le dispositif VNFM (800, 900, 1000), d'une mise à l'échelle de ressources sur l'instance VNF après avoir déterminé que le dispositif gestionnaire a effectué la pré-mise à l'échelle de ressources,
**caractérisé en ce que** le dispositif gestionnaire est un dispositif gestionnaire d'éléments, EM, et l'exécution, par le dispositif VNFM (800, 900, 1000), d'une mise à l'échelle de ressources sur l'instance VNF après avoir déterminé que le dispositif EM a effectué la pré-mise à l'échelle de ressources comprend :
la réception, par le dispositif VNFM (800, 900, 1000), d'un message d'accusé de réception de prétraitement envoyé par le dispositif EM, le message d'accusé de réception de prétraitement étant utilisé pour notifier au dispositif VNFM que la pré-mise à l'échelle de ressources a été effectuée ; et
l'exécution, par le dispositif VNFM (800, 900, 1000), de la mise à l'échelle de ressources sur l'instance VNF sur la base du message d'accusé de réception de prétraitement.

2. Procédé selon la revendication 1, dans lequel l'exécution, par le dispositif VNFM (800, 900, 1000), d'une mise à l'échelle de ressources sur l'instance VNF après avoir déterminé que le dispositif EM a effectué la pré-mise à l'échelle de ressources comprend :
l'exécution, par le dispositif VNFM (800, 900, 1000), de la mise à l'échelle de ressources sur l'instance VNF après l'écoulement d'une période de temps après que le dispositif VNFM a envoyé le message de requête de prétraitement au dispositif EM.

3. Procédé selon l'une quelconque de la revendication 1 ou de la revendication 2, dans lequel avant l'envoi, par un dispositif VNFM (800, 900, 1000), d'un message de requête de prétraitement au dispositif EM, le procédé comprend en outre :
la réception, par le dispositif VNFM (800, 900, 1000), d'une mise à l'échelle de ressources dans un message de requête envoyé par un dispositif orchestrateur de virtualisation de fonctions de réseau, NFVO, la mise à l'échelle de ressources dans le message de requête comprenant une liste d'identifiants d'un conteneur de virtualisation sur lequel une pré-mise à l'échelle de ressources doit être effectuée, dans lequel
le message de requête de prétraitement comprend la liste d'identifiants du conteneur de virtualisation.

4. Procédé selon la revendication 3, dans lequel la mise à l'échelle de ressources dans le message de requête comprend en outre un paramètre temporel, et le paramètre temporel est utilisé pour déterminer une période de temps ; et
l'exécution, par le dispositif VNFM (800, 900, 1000), d'une mise à l'échelle de ressources sur l'instance VNF après avoir déterminé que le dispositif EM a effectué la pré-mise à l'échelle de ressources comprend :
l'exécution, par le dispositif VNFM (800, 900, 1000), de la mise à l'échelle de ressources sur l'instance VNF après l'écoulement de la période de temps après que le dispositif VNFM a envoyé le message de requête de prétraitement au dispositif EM.

5. Procédé selon la revendication 1, dans lequel le message de requête de prétraitement comprend une liste d'identifiants du conteneur de virtualisation sur lequel une pré-mise à l'échelle de ressources doit être effectuée, et la liste d'identifiants est utilisée pour identifier le conteneur de virtualisation sur lequel une pré-mise à l'échelle de ressources doit être effectuée.

6. Procédé selon la revendication 5, dans lequel avant l'envoi, par un dispositif VNFM (800, 900, 1000), d'un message de requête de prétraitement à un dispositif EM, le procédé comprend en outre :
la réception, par le dispositif VNFM (800, 900, 1000), d'une mise à l'échelle de ressources dans un message de requête envoyé par le dispositif EM, la mise à l'échelle de ressources dans le message de requête comprenant des informations d'identification d'une unité de déploiement de virtualisation, VDU, et un conteneur de virtualisation créé sur la base de la VDU identifiée par les informations d'identification comprenant le conteneur de virtualisation identifié par la liste d'identifiants.

7. Procédé selon la revendication 6, dans lequel la mise à l'échelle de ressources dans un message de requête comprend en outre un paramètre de quantité ou un paramètre de proportion,
le paramètre de quantité étant utilisé pour indiquer, au dispositif VNFM (800, 900, 1000), une quantité de conteneurs de virtualisation sur lesquels une pré-mise à l'échelle de ressources doit être effectuée ; et
le paramètre de proportion étant utilisé pour indiquer, au dispositif VNFM (800, 900, 1000), une proportion des conteneurs de virtualisation sur lesquels une pré-mise à l'échelle de ressources doit être effectuée dans l'ensemble des conteneurs de virtualisation créés sur la base de la VDU identifiée par les informations d'identification.

8. Dispositif de gestion de ressources d'une fonction de réseau virtualisé (800, 900, 1000), comprenant :
un dispositif d'entrée/sortie (1001), conçu pour envoyer un message de requête de prétraitement à un dispositif gestionnaire, le message de requête de prétraitement étant utilisé pour demander au dispositif gestionnaire d'effectuer une pré-mise à l'échelle de ressources sur une instance de fonctions de réseau virtualisé, VNF, et la pré-mise à l'échelle de ressources comprenant un service de migration acheminé dans un conteneur de virtualisation sur lequel une pré-mise à l'échelle de ressources doit être effectuée ; et
un processeur (802-803, 902, 1002, 1010), configuré pour exécuter une mise à l'échelle de ressources sur l'instance VNF après avoir déterminé que le dispositif gestionnaire a effectué la pré-mise à l'échelle de ressources,
**caractérisé en ce que** le dispositif gestionnaire est un dispositif gestionnaire d'éléments, EM, et le dispositif d'entrée/sortie (1001) est configuré en outre pour recevoir un message d'accusé de réception de prétraitement envoyé par le dispositif EM, le message d'accusé de réception de prétraitement étant utilisé pour notifier au dispositif de gestion de ressources de fonctions de réseau virtualisé que la pré-mise à l'échelle de ressources a été effectuée ; et
le processeur (802-803, 902, 1002, 1010) est configuré en outre pour exécuter la pré-mise à l'échelle de ressources sur l'instance VNF sur la base du message d'accusé de réception de prétraitement reçu par le dispositif d'entrée/sortie (1001).

9. Dispositif (800, 900, 1000) selon la revendication 8, dans lequel
le processeur (802-803, 902, 1002, 1010) est configuré en outre pour exécuter la mise à l'échelle de ressources sur l'instance VNF après l'écoulement d'une période de temps après que le dispositif d'entrée/sortie (1001) a envoyé le message de requête de prétraitement au dispositif EM.

10. Dispositif (800, 900, 1000) selon l'une quelconque de la revendication 8 ou de la revendication 9, dans lequel
le dispositif d'entrée/sortie (1001) est configuré en outre pour recevoir une mise à l'échelle de ressources dans un message de requête envoyé par un dispositif orchestrateur de virtualisation de fonctions de réseau, NFVO, la mise à l'échelle de ressources dans le message de requête comprenant une liste d'identifiants du conteneur de virtualisation sur lequel une pré-mise à l'échelle de ressources doit être effectuée ; et
le message de requête de prétraitement comprend la liste d'identifiants du conteneur de virtualisation.

11. Dispositif (800, 900, 1000) selon la revendication 10, dans lequel la mise à l'échelle de ressources dans le message de requête comprend en outre un paramètre temporel, et le paramètre temporel est utilisé pour déterminer une période de temps ; et
le processeur (802-803, 902, 1002, 1010) est configuré en outre pour exécuter la mise à l'échelle de ressources sur l'instance VNF après l'écoulement de la période de temps après que le dispositif d'entrée/sortie (1001) a envoyé le message de requête de prétraitement au dispositif EM.

12. Dispositif (800, 900, 1000) selon la revendication 9, dans lequel le message de requête de prétraitement comprend une liste d'identifiants du conteneur de virtualisation sur lequel une pré-mise à l'échelle de ressources doit être effectuée, et la liste d'identifiants est utilisée pour identifier le conteneur de virtualisation sur lequel une pré-mise à l'échelle de ressources doit être effectuée.

13. Produit de programme informatique, comprenant un code de programme informatique qui, lorsqu'il est exécuté par une unité informatique, amènera l'unité informatique à mettre en œuvre le procédé selon l'une quelconque des revendications 1 à 7.
